# EUROPÄISCHE PATENTANMELDUNG

(11) **EP 4 438 920 A1**
(43) Veröffentlichungstag der Anmeldung: **02.10.2024**
(21) Anmeldenummer: 24153369.4
(22) Anmeldetag: 23.01.2024
(51) Int. Cl.: F16H 19/04, E05F 15/616, E05F 15/619, E05F 15/63

(54) **AKTORMECHANISMUS FÜR EINEN GEGENSTAND DER HAUSHALTSAUSSTATTUNG UND AUSSTATTUNGSGEGENSTAND FÜR EINEN HAUSHALT MIT DIESEM**

(30) Priorität: 28.03.2023 DE 102023107855
(71) Anmelder: emz-Hanauer GmbH & Co. KGaA, 92507 Nabburg (DE)
(72) Erfinder: Bauriedl, Josef, 92431 Neunburg vorm Wald (DE); Flierl, Thomas, 92507 Nabburg (DE)
(74) Vertreter: Hannke, Christian

(57) **Zusammenfassung**

Ausführungsbeispiele der Erfindung sehen einen Türöffner (18) für ein Elektrogerät der Haushaltsausstattung vor. Der Türöffner umfasst einen Elektromotor (30) und einen mittels des Elektromotors antreibbaren Drücker (36) zum drückenden Zusammenwirken mit der Tür des Elektrogeräts. Zwischen dem Elektromotor und dem Drücker ist ein Kraftübertragungsmechanismus (32) vorgesehen, welcher bei gleicher Drehzahl des Elektromotors eine veränderliche Bahngeschwindigkeit des Drückers zu gewährleisten vermag. Bestimmte Ausführungsformen sehen hierzu ein mehrstufiges Zahnstangengetriebe vor, welches von einem Zahnkranz (42) und einer Zahnstange (38) gebildet ist, die über verschiedene, wechselweise in kämmenden Eingriff miteinander bringbare Verzahnungspaarungen die Antriebskraft des Elektromotors auf den Drücker übertragen können.

## Beschreibung

Die Erfindung befasst sich mit einem Aktormechanismus für einen Gegenstand der Haushaltsausstattung. Außerdem betrifft die Erfindung einen mit einem solchen Aktormechanismus ausgeführten Ausstattungsgegenstand für einen Haushalt.

Bei elektrischen Haushaltsgeräten wie z.B. Kühlschränken, Geschirrspülmaschinen, Wäschebehandlungsgeräten (Waschmaschinen, Wäschetrocknern) oder dgl. geht die Entwicklung dahin, solche Geräte mit einer Funktion zur mechanisierten, d.h. nicht-händischen Türöffnung auszustatten. Ein nicht durch eine konkrete Benutzereingabe veranlasstes, automatisches spaltweises Öffnen der Tür kann beispielsweise in der Endphase eines Nassreinigungsprogramms nützlich oder erwünscht sein. Zum Beispiel erlaubt dies bei einer Geschirrspülmaschine das Entweichen von heißem Dampf aus dem Spülraum und das energiesparende Trocknen des Geschirrs in dem Spülraum. Bei einer Waschmaschine erlaubt es eine Frischluftzufuhr in die Waschtrommel und vermeidet dadurch eine unangenehme Geruchsentwicklung der noch feuchten Wäsche. Beim programmgesteuerten Aufdrücken der Tür ohne Nutzereinwirkung kommt es auf die Öffnungsgeschwindigkeit, mit welcher ein Türöffner des Haushaltsgeräts die Tür mechanisiert öffnet, üblicherweise nicht an. Wenn hingegen die Türöffnungsfunktion auf eine Nutzerintervention hin aktiv werden soll (d.h. wenn der Nutzer mittels einer geeigneten Bedienungseingabe, z.B. durch Berühren oder Drücken einer Taste, einen konkreten Öffnungswunsch anzeigt), spielt der Benutzerkomfort eine wichtige Rolle. Der Benutzer möchte nicht lange warten müssen, bis der Türöffner die Tür einen Spalt weit aufgedrückt hat. Stattdessen möchte der Benutzer typischerweise, dass der Öffnungsvorgang rasch vonstatten geht.

Zum Öffnen der geschlossenen Tür eines Haushaltsgeräts der zuvor genannten Art kann es erforderlich sein, anfänglich einen erhöhten Widerstand zu überwinden. Ein solcher anfänglicher Widerstand kann beispielsweise von einem Türverschluss stammen, der die Aufgabe hat, die geschlossene Tür geschlossen zu halten. Geschirrspülmaschinen, Wäschebehandlungsgeräte und andere Gerätetypen wir z.B. ein Mikrowellengerät sind regelmäßig mit einem solchen Türverschluss ausgestattet. Aber auch Kühlschranktüren sollen geschlossen bleiben, nachdem sie vom Benutzer geschlossen wurden, um das Eindringen von Wärme in den kalten Innenraum zu verhindern. Deshalb ist auch bei Kühlschränken oftmals ein anfänglicher Widerstand festzustellen, der beim Öffnen der Tür überwunden werden muss.

Dieser Öffnungswiderstand kann beispielsweise zumindest teilweise von einem Unterdruck im Innenraum (Kaltraum) des Kühlschranks herrühren. Alternativ oder zusätzlich kann bei Kühlschränken der Öffnungswiderstand z.B. von Magnetdichtungen herrühren, deren magnetische Haltewirkung die Tür geschlossen halten soll, oder/und von Scharnierfedern, die im Bereich der Türscharniere des Kühlschranks sitzen und eine Federvorspannung auf die Tür ausüben.

Zur Überwindung des Öffnungswiderstands muss ein als Türöffner dienender Aktormechanismus eine erhöhte Kraft aufbringen. Nach Überwindung des Öffnungswiderstands kann jedoch eine geringere Kraft ausreichen, um die Tür bis zum gewünschten Öffnungsmaß weiter aufzudrücken. Es kann also während eines Öffnungsvorgangs unterschiedliche Kraftanforderungen an den Aktormechanismus geben. Der Aktormechanismus muss so ausgelegt sein, dass er das benötigte Kraftmaximum bereitstellen kann. Soll in dem Aktormechanismus als Antriebskraftquelle kein überdimensionierter Elektromotor eingesetzt werden, kann es sein, dass eine Auslegung des Aktormechanismus allein mit Blick auf das benötigte Kraftmaximum eine insgesamt unzureichende Öffnungsgeschwindigkeit der Tür mit sich bringt.

Der Erfindung liegt deshalb die Aufgabe zugrunde, einen Aktormechanismus bereitzustellen, der einerseits in der Lage ist, durch schnelles Bewegen einer beweglichen Komponente eines Ausstattungsgegenstands eines Privathaushalts einen hohen Benutzerkomfort zu gewährleisten, und andererseits keinen überdimensionierten Elektromotor als Antriebskraftquelle benötigt.

Zur Lösung dieser Aufgabe sieht die Erfindung einen Aktormechanismus zum Antrieb einer beweglichen Komponente eines Gegenstands der Haushaltsausstattung vor, umfassend einen Elektromotor, einen mittels des Elektromotors innerhalb eines begrenzten Bewegungsbereichs insbesondere linearbeweglich antreibbaren Koppelteil zur schub- oder/und zugübertragenden Kopplung mit der beweglichen Komponente und einen Kraftübertragungsmechanismus zwischen dem Elektromotor und dem Koppelteil. Der Kraftübertragungsmechanismus ist erfindungsgemäß dazu eingerichtet, bei gegebener Drehzahl des Elektromotors eine veränderliche Bahngeschwindigkeit des Koppelteils zu gewährleisten.

Bei der erfindungsgemäßen Lösung wird ein variabler Kraftübertragungsmechanismus zwischen dem Elektromotor und dem Koppelteil eingesetzt. Die Variabilität des Kraftübertragungsmechanismus besteht darin, für eine gegebene Drehzahl des Elektromotors nicht eine unveränderliche, stets gleichbleibende Bahngeschwindigkeit des Koppelteils zu gewährleisten. Stattdessen ist der Kraftübertragungsmechanismus in der Lage, in verschiedenen Konfigurationen zu arbeiten, die bei gegebener Drehzahl des Elektromotors eine unterschiedliche, insbesondere lineare Bahngeschwindigkeit des Koppelteils ermöglichen. Die unterschiedliche Bahngeschwindigkeit des Koppelteils bei gegebener Drehzahl des Elektromotors bedeutet eine unterschiedliche Kraft, welche der Aktormechanismus in den verschiedenen Konfigurationen aufzubringen vermag. Deshalb kann eine Konfiguration, welche bei gegebener Drehzahl des Elektromotors eine geringere Bahngeschwindigkeit des Koppelteils bewirkt, bei erhöhtem Kraftbedarf genutzt werden. Dagegen kann eine Konfiguration, welche bei gegebener Drehzahl des Elektromotors eine größere Bahngeschwindigkeit des Koppelteils bewirkt, bei geringerem Kraftbedarf genutzt werden. Dadurch kann der Aktormechanismus an ein ungleichförmiges Kraftbedarfsprofil beim Bewegen der Komponente angepasst werden und die Bewegung der Komponente dennoch in zufriedenstellender Gesamtzeit durchgeführt werden.

Die Fähigkeit des Kraftübertragungsmechanismus, in unterschiedlichen Konfigurationen zu arbeiten, kann von der Position des Koppelteils längs seines Bewegungswegs unabhängig sein oder von der Position des Koppelteils abhängig sein. Bei bestimmten Ausführungsformen bewirkt der Kraftübertragungsmechanismus bei gegebener Drehzahl des Elektromotors in unterschiedlichen Teilbereichen des Bewegungsbereichs des Koppelteils eine jeweils unterschiedliche Bahngeschwindigkeit des Koppelteils. Die Konfiguration des Kraftübertragungsmechanismus ist hier abhängig von der Position des Koppelteils. Befindet sich der Koppelteil in einem ersten Teilbereich seines Bewegungsbereichs, bewirkt der Kraftübertragungsmechanismus bei gegebener Drehzahl des Elektromotors eine Bewegung des Koppelteils mit einer ersten Bahngeschwindigkeit. Befindet sich der Koppelteil in einem anderen, zweiten Teilbereich seines Bewegungsbereichs, bewirkt der Kraftübertragungsmechanismus bei gegebener Drehzahl des Elektromotors eine Bewegung des Koppelteils mit einer anderen, zweiten Bahngeschwindigkeit. Es versteht sich, dass die Anzahl der Konfigurationen des Kraftübertragungsmechanismus nicht auf zwei beschränkt ist. Vielmehr kann der Kraftübertragungsmechanismus auch in drei oder mehr unterschiedliche Konfigurationen einstellbar sein. Dementsprechend können drei oder mehr unterschiedliche Teilbereiche des Bewegungsbereichs des Koppelteils definiert sein, die sich bei gegebener Drehzahl des Elektromotors durch eine jeweils unterschiedliche Bahngeschwindigkeit des Koppelteils unterscheiden.

Eine Konfiguration, in welcher der Kraftübertragungsmechanismus bei gegebener Drehzahl des Elektromotors eine geringere Bahngeschwindigkeit des Koppelteils bewirkt, kann bei bestimmten Ausführungsformen dazu genutzt werden, einen anfänglichen Widerstand beim Öffnen einer geschlossenen Tür oder allgemein beim Bewegen einer beweglichen Komponente des Ausstattungsgegenstands zu überwinden. Alternativ oder zusätzlich kann die Konfiguration mit relativ geringerer Bahngeschwindigkeit des Koppelteils dazu genutzt werden, einen Schließwiderstand zu überwinden, welcher bei einer Schließbewegung der Tür zu deren Ende hin, d.h. kurz bevor die endgültige Türschließstellung erreicht wird, auftreten kann. Allgemeiner gesprochen kann zum Ende des Bewegungsbereichs der mittels des Aktormechanismus zu bewegenden Komponente ein erhöhter Bewegungswiderstand auftreten, zu dessen Überwindung sich die Konfiguration des Kraftübertragungsmechanismus mit relativ geringerer Bahngeschwindigkeit des Koppelteils eignet.

Dagegen kann eine Konfiguration, in welcher der Kraftübertragungsmechanismus bei gegebener Drehzahl des Elektromotors eine größere Bahngeschwindigkeit des Koppelteils bewirkt, dazu genutzt werden, nach Überwindung des anfänglichen Widerstands (oder vor Auftreten eines erhöhten Schließwiderstands oder allgemein eines erhöhten End-Widerstands) rasch einen weiteren, insbesondere restlichen Teil des gesamten Bewegungsbereichs des Koppelteils zu durchlaufen. Dadurch können die Gesamtdauer der Bewegungsphase verkürzt werden und der Benutzerkomfort gesteigert werden. Zugleich muss kein überdimensionierter Elektromotor verwendet werden.

Die Teilbereiche des Bewegungsbereichs, in denen der Kraftübertragungsmechanismus bei gegebener Drehzahl des Elektromotors eine jeweils unterschiedliche Bahngeschwindigkeit des Koppelteils bewirkt, können zumindest bei bestimmten Ausführungsformen der Erfindung unterschiedliche Streckenlänge haben. Beispielsweise kann der Kraftübertragungsmechanismus bei gegebener Drehzahl des Elektromotors in einem Teilbereich mit größerer Streckenlänge eine höhere Bahngeschwindigkeit des Koppelteils bewirken als in einem Teilbereich mit kürzerer Streckenlänge. Selbstverständlich ist auch eine umgekehrte Ausgestaltung vorstellbar, sodass ein Teilbereich mit kürzerer Streckenlänge mit einer höheren Bahngeschwindigkeit des Koppelteils einhergeht als ein Teilbereich mit größerer Streckenlänge. Jeder der Teilbereiche des Bewegungsbereichs des Koppelteils kann beispielsweise eine Streckenlänge von mindestens etwa 10 mm oder mindestens etwa 15 mm oder mindestens etwa 20 mm aufweisen. Alternativ oder zusätzlich kann jeder der Teilbereiche beispielsweise eine Streckenlänge von höchstens etwa 120 mm oder höchstens etwa 100 mm oder höchstens etwa 80 mm aufweisen. Diese Zahlenangaben sind selbstverständlich rein beispielhaft und betreffen nur bestimmte Ausführungsformen der Erfindung. Eine grundsätzliche Beschränkung ist mit diesen Zahlenwerten nicht beabsichtigt.

Gemäß bestimmter Ausführungsformen kann der Kraftübertragungsmechanismus eine Mehrzahl in parallelen Kraftübertragungszweigen angeordneter Verzahnungspaarungen umfassen, die jeweils eine unterschiedliche Getriebeübersetzung definieren und wechselweise, nämlich in je einem anderen Teilbereich des Bewegungsbereichs des Koppelteils in kämmendem Eingriff stehen. Verlässt der Koppelteil einen der Teilbereiche, wird der kämmende Eingriff der betreffenden Verzahnungspaarung gelöst und es tritt eine andere Verzahnungspaarung in kämmenden Eingriff.

Eine erste Verzahnung jeder der Mehrzahl Verzahnungspaarungen ist bei bestimmten Ausführungsformen von einer mit dem Koppelteil zur gemeinsamen Linearbewegung gekoppelten Zahnstangenanordnung gebildet. Die zweite Verzahnung jeder der Mehrzahl Verzahnungspaarungen ist bei diesen Ausführungsformen dagegen als Zahnradverzahnung ausgebildet. Beispielsweise ist die Zahnradverzahnung eine Stirnradverzahnung. Die Zahnstangenanordnung kann von einer einzelnen Zahnstange gebildet sein, sie kann alternativ aber auch von mehreren Zahnstangenstücken gebildet sein, die zwar zur gemeinsamen Bewegung miteinander angeordnet sind, jedoch nicht notwendigerweise fest miteinander verbunden sein müssen.

Die zweite Verzahnung jeder der Mehrzahl Verzahnungspaarungen ist bei bestimmten Ausführungsformen von einer sich insbesondere ringsum erstreckenden Zahnrad-Umfangsverzahnung mit jeweils unterschiedlichem Wälzkreisdurchmesser gebildet. Zugleich weist die Zahnstangenanordnung in Zuordnung zu jeder der Zahnrad-Umfangsverzahnungen eine sich insbesondere über einen jeweils unterschiedlichen Stangenlängsabschnitt erstreckende Längsverzahnung auf. Eine Ringsum-Erstreckung der Zahnrad-Umfangsverzahnung meint eine Erstreckung über den gesamten Zahnradumfang. Die Zahnrad-Umfangsverzahnungen und die Längsverzahnungen können jeweils quer zur Stangenlängsrichtung gegeneinander versetzt sein.

Bei bestimmten Ausführungsformen umfasst der Kraftübertragungsmechanismus einen Zahnkranz mit mehreren (mindestens zwei) Zahnringen, die jeweils einer anderen Verzahnungspaarung zugehören. Bei anderen Ausführungsformen kann der Kraftübertragungsmechanismus separate Zahnräder umfassen, welche die Zahnradverzahnung einer jeweiligen Verzahnungspaarung bilden.

Gemäß bestimmter Ausführungsformen ist der Aktormechanismus als vorgefertigtes, mechanisch funktionsfähiges Aktormodul ausgebildet. Dieses Aktormodul weist ein Modulgehäuse auf, in welchem der Elektromotor und ein den Koppelteil bildender Stangenkörper aufgenommen sind. Der Stangenkörper kann zwischen einer Vorschubposition und einer Rückzugsposition in Stangenlängsrichtung bewegt werden. Die Vorschubposition kann einem der Enden des Bewegungsbereichs des Koppelteils entsprechen; in der Vorschubposition ist der Stangenkörper mit dem Koppelteil voran aus dem Modulgehäuse herausgefahren. Die Rückzugsposition kann dagegen dem anderen Ende des Bewegungsbereichs des Koppelteils entsprechen; in der Rückzugsposition ist der Stangenkörper in das Modulgehäuse zurückgezogen. Dabei kann der Stangenkörper in der Rückzugsposition annähernd vollständig in das Modulgehäuse zurückgezogen sein; es ist jedoch nicht ausgeschlossen, dass der Stangenkörper auch in der Rückzugsposition noch ein Stück weit aus dem Modulgehäuse herausragt, dann aber jedenfalls weniger weit als in der Vorschubposition.

Bei bestimmten Ausführungsformen bewirkt der Kraftübertragungsmechanismus bei gegebener Drehzahl des Elektromotors in einem näher bei der Rückzugsposition des Stangenkörpers liegenden ersten Teilbereich des Bewegungsbereichs des Koppelteils eine geringere Bahngeschwindigkeit des Koppelteils. Dagegen bewirkt der Kraftübertragungsmechanismus in einem weiter von der Rückzugsposition entfernten zweiten Teilbereich eine größere Bahngeschwindigkeit des Koppelteils. Der erste Teilbereich kann die Rückzugsposition umfassen.

Die Erfindung sieht des Weiteren einen Ausstattungsgegenstand für einen Haushalt vor, wobei der Ausstattungsgegenstand eine bewegliche Komponente und einen Aktormechanismus zum Antrieb der beweglichen Komponente umfasst. Der Aktormechanismus ist nach der vorstehend erläuterten Art ausgestaltet. Der Ausstattungsgegenstand ist beispielsweise ein Elektrogerät mit einem in einem Gerätehauptkörper gebildeten Nutzraum, wobei die bewegliche Komponente eine relativ zu dem Gerätehauptkörper beweglich angeordnete Tür zum Verschließen des Nutzraums ist. Der Aktormechanismus ist bei bestimmten Ausführungsformen für mindestens eine der beiden folgenden Arbeitsweisen ausgestaltet und gesteuert: er arbeitet als Türöffner zum Aufdrücken der geschlossenen Tür oder/und er arbeitet als Türschließer zum Schließen der spaltgeöffneten Tür.

Der Begriff der Tür ist im Rahmen der vorliegenden Offenbarung breit zu verstehen. Sowohl was die Richtung der Beweglichkeit der Tür (schwenkbar, linear) als auch die räumliche Orientierung und Lage der Tür anbelangt (z.B. aufrecht an einer Front des Ausstattungsgegenstands oder als hochschwenkbare Klappe oder Deckel an einer Oberseite des Ausstattungsgegenstands), soll der Türbegriff keiner bestimmten Beschränkung unterliegen. Eine Spaltöffnungsstellung kann die Tür dementsprechend ausgehend von einer Schließstellung erreichen, indem sie ein Stück weit geradlinig aufgeschoben oder um eine Schwenkachse verschwenkt wird.

Gemäß bestimmter Ausführungsformen ist der Aktormechanismus dazu eingerichtet, bei gegebener Drehzahl des Elektromotors eine niedrigere Bahngeschwindigkeit des Koppelteils innerhalb eines eine Türschließstellung umfassenden ersten Teilbewegungsbereichs der Tür zu bewirken als in einem zweiten Teilbewegungsbereich, in welchem die Tür stärker geöffnet ist als in dem ersten Teilbewegungsbereich. Eine Steuereinheit des Ausstattungsgegenstands kann den Aktormechanismus so steuern, dass ungeachtet der aktuellen Konfiguration des Kraftübertragungsmechanismus und ungeachtet der aktuellen Position des Koppelteils innerhalb von dessen Bewegungsbereich der Elektromotor mit einer stets gleichbleibenden Versorgungsspannung betrieben wird. Es ist zwar möglich, dass je nach aktueller Last die Drehzahl des Elektromotors nicht stets gleich bleibt, dennoch wird bei solchen Ausführungsformen die Versorgungsspannung des Elektromotors nicht angepasst, um mögliche Last- und Drehzahlschwankungen des Elektromotors auszugleichen.

Der Ausstattungsgegenstand kann beispielsweise ein Haushalts-Kühlgerät (z.B. Kühlschrank oder Gefriergerät), eine Geschirrspülmaschine oder eine Wäschebehandlungsmaschine (z.B. Waschmaschine oder Wäschetrockner) sein.

Die Kopplung des Koppelteils mit der zu bewegenden Komponente ist zumindest bei bestimmten Ausführungsformen eine lösbare, d.h. nicht permanente Kopplung, die beispielsweise als mechanische Anschlagkopplung, als Formschlusskopplung oder als Magnetkopplung ausgeführt sein kann.

Bei bestimmten Ausführungsformen umfasst das Elektrogerät ferner einen Türverschluss zum Geschlossenhalten der Tür. Der Kraftübertragungsmechanismus vermag hierbei bei gegebener Drehzahl des Elektromotors eine relativ geringere Bahngeschwindigkeit des Koppelteils in einer Phase zu gewährleisten, in welcher beim Öffnen der geschlossenen Tür eine Schließhaltewirkung des Türverschlusses dem Aufdrücken der Tür noch entgegenwirkt, als in einer Phase, in welcher die Schließhaltewirkung des Türverschlusses bereits überwunden ist.

Die Erfindung wird nachfolgend anhand der beigefügten Zeichnungen weiter erläutert. Es stellen dar:
Figur 1 schematisch einen Haushalts-Kühlschrank gemäß einem Ausführungsbeispiel,
Figur 2 einen in einem Haushalts-Elektrogerät einsetzbaren Türöffner gemäß einem Ausführungsbeispiel in einem Zustand bei eingefahrener Drückerstange,
Figur 3 den Türöffner der Figur 2 in einer aufgeschnittenen Ansicht bei eingefahrener Drückerstange, und
Figur 4 den Türöffner der Figur 2 in einer aufgeschnittenen Ansicht bei teilweise ausgefahrener Drückerstange.

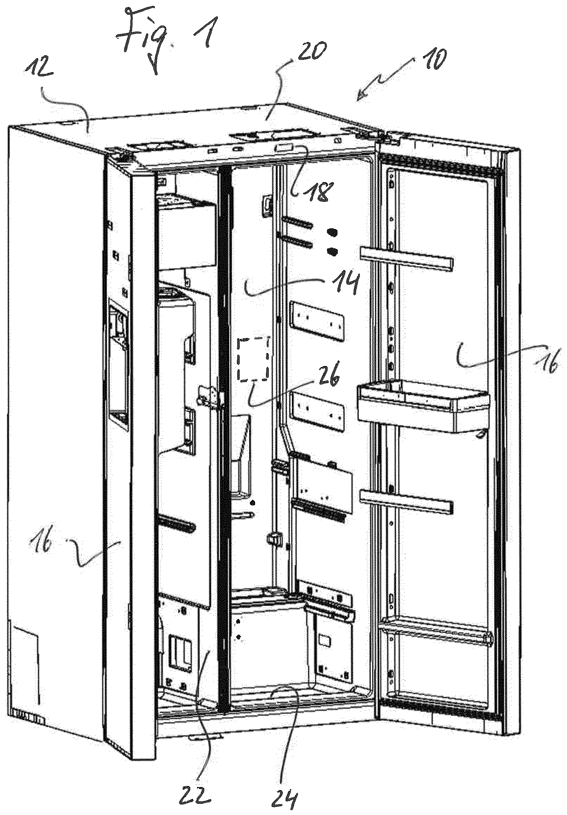

Es wird zunächst auf Figur 1 verwiesen. Der dort dargestellte Kühlschrank ist allgemein mit 10 bezeichnet und für den Einsatz in einem Privathaushalt vorgesehen. Er weist einen Gerätehauptkörper (Korpus) 12 mit einem darin gebildeten Kaltraum 14 auf, der im gezeigten Beispielfall zweigeteilt und durch zwei an dem Gerätehauptkörper 12 schwenkbar angebrachte Türen 16 verschließbar ist. Jede der Türen 16 dient zum Verschließen je einer Hälfte des Kaltraums 14, wobei die Türen 16 in dem gezeigten Beispielfal, wenn sie geschlossen sind, seitlich nebeneinander angeordnet sind. Kühlschränke einer solchen Gestaltung sind handelsüblich unter der Bezeichnung "Side-by-Side" bekannt. Der Kaltraum 14 ist dabei typischerweise in einen Teil, in dem Temperaturen unterhalb des Gefrierpunkts herrschen und der zur gefrorenen Aufbewahrung von Lebensmitteln dient, und einen Teil, in dem Temperaturen bis herunter zu knapp oberhalb des Gefrierpunkts herrschen und der zur nicht-gefrorenen Aufbewahrung von Lebensmitteln dient, unterteilt. Der Gefrierteil des Kaltraums 14 ist durch eine der Türen 16 verschließbar, der Kühlteil durch die andere deren Türen 16. Es versteht sich, dass die in Figur 1 gezeigte Side-by-Side-Ausgestaltung des Kühlschranks 10 rein beispielhaft ist und dass stattdessen vielfältige andere Ausgestaltungen möglich sind, insbesondere solche mit nur einer einzigen Tür 16.

Mindestens eine der Türen 16 des Kühlschranks 10 kann mittels eines in Figur 1 nur schematisch angedeuteten Aktormechanismus 18 aufgedrückt werden, ohne dass der Benutzer hierzu an der betreffenden Tür 16 ziehen muss. Der Aktormechanismus 18 wirkt hier als Türöffner, weswegen er nachfolgend auch so bezeichnet wird. Im gezeigten Beispielfall ist der Türöffner 18 der in Figur 1 rechten der beiden Türen 16 zugeordnet. Dies ist jedoch nur beispielhaft; alternativ oder zusätzlich kann der in Figur 1 linken der beiden Türen 16 der Türöffner 18 bzw. ein weiterer, hier nicht dargestellter Türöffner zugeordnet sein. Der Türöffner 18 ist im gezeigten Beispielfall in eine Dachwand 20 des Gerätehauptkörpers 12 eingebaut; auch dies ist indes nur beispielhaft und es ist alternativ denkbar, den Türöffner 18 in eine die beiden Hälften des Kaltraums 14 voneinander trennende Mittelwand 22, in eine den Kaltraum 14 untenseitig begrenzende Bodenwand 24 oder in die Tür 16 einzubauen. Der Türöffner 18 erlaubt ein mechanisiertes Öffnen der Tür 16 in Antwort auf eine benutzerseitige Eingabe, die von einer schematisch bei 26 angeordneten Steuereinheit des Kühlschranks 10 als Türöffnungswunsch erkannt wird. Die den Türöffnungswunsch repräsentierende Benutzereingabe kann berührend oder berührungslos sein und beispielsweise einen Druck auf eine Bedienungstaste oder eine bloße Annäherung an ein geeignet kenntlich gemachtes Sensorfeld oder eine definierte Bewegungsgeste umfassen. Derartige Eingabemöglichkeiten, um einen Bedienungswunsch eines Benutzers entgegenzunehmen, sind als solche in der Fachwelt bekannt und bedürfen an dieser Stelle keiner näheren Erläuterung.

Die von dem Türöffner 18 bereitgestellte Türöffnungsfunktion erlaubt es, die geschlossene Tür 16 einen Spalt weit aufzudrücken, wobei die Größe des Spalts beispielsweise einige Zentimeter am Ort der größten Spaltweite beträgt.

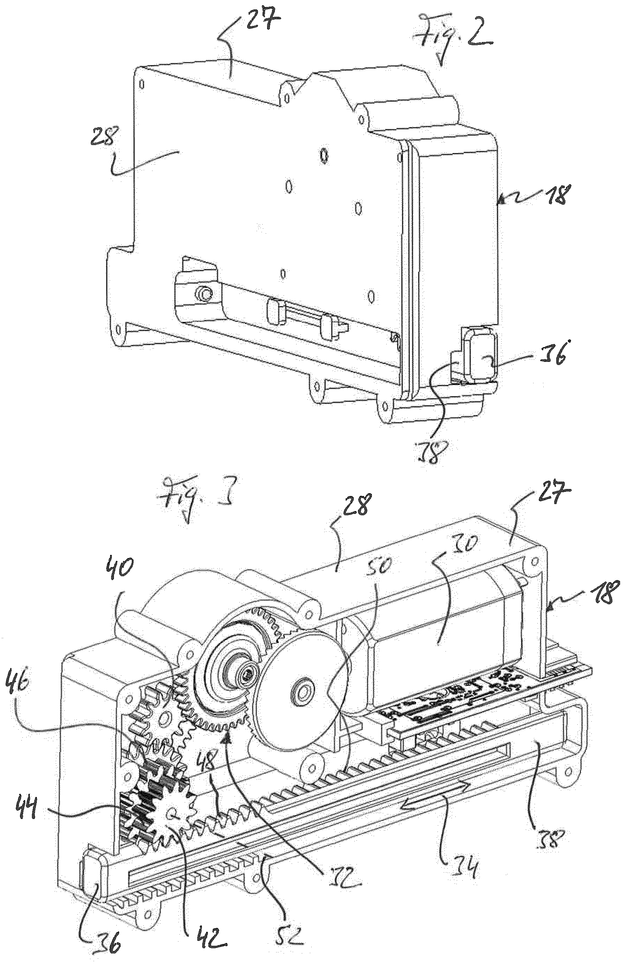

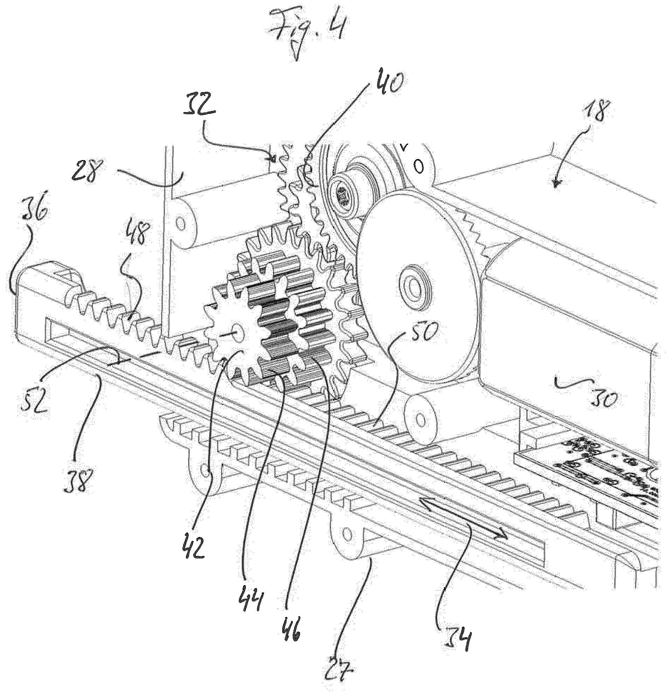

Eine beispielhafte Ausgestaltung des Türöffners 18 ist in den Figuren 2 bis 4 gezeigt. Der Türöffner 18 der Figuren 2 bis 4 ist als vorgefertigtes, mechanisch und elektromechanisch funktionsfähiges Aktormodul (Öffnermodul) 27 mit einem Modulgehäuse 28 ausgebildet, welches mit nicht näher bezeichneten Montageformationen ausgeführt ist, die eine Befestigung des Türöffners 18 in der gewünschten Einbaulage an dem Gerätehauptkörper 12 bzw. an der Tür 16 gestatten. In dem Modulgehäuse 28 sind ein Elektromotor 30 und ein Kraftübertragungsmechanismus 32 aufgenommen, der in kraftübertragender Antriebskopplung mit einem in einer linearen Richtung (angedeutet durch einen Doppelpfeil 34) vor- und zurückbewegbaren, hier als Drücker dienenden und nachfolgend auch so bezeichneten Koppelteil 36 steht.

Der Kraftübertragungsmechanismus 32 umfasst eine Zahnstange 38, welche in der Linearrichtung 34 beweglich angeordnet ist und im gezeigten Beispielfall im Bereich eines ihrer Stangenlängsenden den Drücker 36 bildet oder trägt. Der Drücker 36 kann ein integraler Bestandteil der Zahnstange 38 sein; alternativ ist es vorstellbar, den Drücker 36, den man auch als Drückkopf bezeichnen kann, von einem gesonderten Bauteil zu bilden, das mit der Zahnstange 38 zur gemeinsamen Bewegung entlang der Linearrichtung 34 gekoppelt ist. Der Drücker 36 ist zum drückenden Eingriff mit einer druckaufnehmenden Komponente des Kühlschranks 10 ausgebildet; bei der druckaufnehmenden Komponente kann es sich um die Tür 16 bzw. einen Bestandteil der Tür 16 handeln, sofern der Türöffner 18 an dem Gerätehauptkörper 12 angeordnet ist, oder es kann sich um einen Bestandteil des Gerätehauptkörpers 12 handeln, sofern der Türöffner 18 an der Tür angeordnet ist.

Der Drücker 36 kann durch Betätigung des Elektromotors 30 längs der Linearrichtung 34 zwischen einer zurückgezogenen Inaktivstellung und einer vorgeschobenen Aktivstellung verstellt werden. In der Inaktivstellung ist der Drücker 36 am stärksten in Richtung in das Modulgehäuse 28 des Türöffners 18 hinein zurückgezogen, in der Aktivstellung ist der Drücker 36 am weitesten aus dem Modulgehäuse 28 herausbewegt. Zum Öffnen der Tür 16 ist der Drücker 36 aus der Inaktivstellung in Richtung auf die Aktivstellung zu bewegen; die Aktivstellung definiert einen Spaltöffnungszustand für die Tür 16. In der Inaktivstellung des Drückers 36 ist ein vollständiges Schließen der Tür 16 möglich. Insbesondere kann in der Inaktivstellung der Drücker 36 kontaktlos mit der druckaufnehmenden Komponente sein und einen bestimmten Abstand von dieser haben.

Zusätzlich zu der Zahnstange 38 umfasst der Kraftübertragungsmechanismus 32 ein untersetzend wirkendes Zahnradgetriebe 40 mit einem stirnverzahnten Ausgangs-Zahnkranz 42, der zusammen mit der Zahnstange 38 ein mehrstufiges Zahnstangengetriebe bildet. Der Zahnkranz 42 weist abtriebsseitig zwei Umfangsverzahnungen 44, 46 auf, welche mit je einer von zwei Längsverzahnungen 48, 50 der Zahnstange 38 eine Verzahnungspaarung bilden. Jede dieser Verzahnungspaarungen steht in einem definierten Teilbereich des Gesamtbewegungsbereichs der Zahnstange 38 zwischen der Inaktivstellung und der Aktivstellung des Drückers 36 in kämmendem Eingriff und ermöglicht dadurch eine Antriebskraftübertragung auf den Drücker 36.

Die beiden Umfangsverzahnungen 44, 46 des Zahnkranzes 42 sind im gezeigten Beispielfall jeweils als Vollkreisverzahnungen ausgeführt, erstrecken sich also über den gesamten Umfang des Zahnkranzes 42. Sie weisen jeweils einen unterschiedlichen Wälzkreisdurchmesser auf. Das bedingt bei gegebener Drehzahl des Elektromotors 30 und damit gegebener Drehzahl des Zahnkranzes 42 eine unterschiedliche (Kreis-)Bahngeschwindigkeit der Verzahnung 44 im Vergleich zur Verzahnung 46. Die durchmessergrößere Verzahnung (im gezeigten Beispielfall die Verzahnung 46) hat eine größere Bahngeschwindigkeit als die durchmesserkleinere Verzahnung (hier die Verzahnung 44). Die unterschiedliche Bahngeschwindigkeit der Verzahnungen 44, 46 bewirkt eine entsprechend unterschiedliche (Linear-)Bahngeschwindigkeit der Zahnstange 38 und folglich des Drückers 36, je nachdem, welche der Verzahnungspaarungen zum jeweiligen Zeitpunkt kämmt und Antriebskraft auf die Zahnstange 38 überträgt. Entsprechend dem axialen Versatz der beiden Verzahnungen 44, 46 (axial in Bezug auf eine Drehachse 52 des Zahnkranzes 42) sind auch die beiden Verzahnungen 48, 50 mit entsprechendem Versatz in Richtung quer zur Linearrichtung 34 an der Zahnstange 38 gebildet.

Die Paarung der durchmesserkleineren Umfangsverzahnung 44 des Zahnkranzes 42 mit der Verzahnung 48 der Zahnstange 38 dient zum Antrieb des Drücker 36 auf einem solchen Teilstück des Gesamtbewegungsbereichs des Drückers 36, das sich ausgehend von der Inaktivstellung über eine Länge erstreckt, die erforderlich ist, um einen anfänglichen Öffnungswiderstand der geschlossenen Tür 16 zu überwinden. Dieser Widerstand kann zumindest zum Teil durch einen Unterdruck verursacht sein, der bei geschlossener Tür 16 in dem Kaltraum 14 herrscht. Alternativ oder zusätzlich sind andere Ursachen für diesen Widerstand möglich, z.B. eine magnetische Haltekraft, welche die Tür 16 geschlossen hält, oder/und eine auf die Tür 16 wirkende Federvorspannung, welche die Tür 16 in ihre Schließstellung drängt. Bei anderen Gerätetypen als einem Haushalts-Kühlschrank kann der erwähnte anfängliche Widerstand beim Öffnen der Tür 16 zumindest zum Teil von einem mechanischen Türverschluss (in den Zeichnungen nicht näher dargestellt) stammen, der eine Funktion zum Geschlossenhalten der Tür und ggf. auch zum Zuziehen der Tür beim Schließen derselben leistet. Ungeachtet der konkreten Ursache des anfänglichen Öffnungswiderstands erfordert eine Weiterbewegung des Drückers 36, d.h. ein weiteres Aufdrücken der Tür 16, nachdem der anfängliche Widerstand zumindest größtenteils überwunden wurde, nur noch eine vergleichsweise geringe Kraft.

Deswegen wird zum Antrieb der Zahnstange 38 in einem initialen Teilbereich des gesamten Bewegungsbereichs des Drückers 36 ausgehend von dem Zustand bei geschlossener Tür 16 eine Konfiguration mit größerer Untersetzung des Kraftübertragungsmechanismus 32 benutzt. Bei dieser Konfiguration steht die durchmesserkleinere Verzahnung 44 des Zahnkranzes 42 in dem initialen Teilbereich in kämmendem Eingriff mit der Verzahnung 48 der Zahnstange 38.

Auf einem anschließenden Rest-Teilstück bis zum Erreichen der maximalen ausgefahrenen Stellung des Drückers 36 (d.h. Aktivstellung) kommt indessen eine Konfiguration mit geringerer Untersetzung des Kraftübertragungsmechanismus 32 zum Einsatz. Bei dieser Konfiguration kämmt die durchmessergrößere Verzahnung 46 mit der Verzahnung 50 der Zahnstange 38. Dieses verbleibende Teilstück des Öffnungswegs der Tür 16 kann so mit erhöhter Geschwindigkeit durchlaufen werden, was den Öffnungsvorgang insgesamt beschleunigt. Die Versorgungsspannung des Elektromotors 30 muss hierzu nicht verändert werden. Dieser kann mit gleichbleibender Versorgungsspannung betrieben werden.

Die gezeigte Ausgestaltung des Türöffners 20 ermöglicht demzufolge eine Variation der Übersetzung des Zahnstangengetriebes 38, 42 in mehreren (hier: zwei) Stufen. Je nach Getriebestufe wird bei gegebener Drehzahl des Elektromtors 30 eine schnellere oder langsamere Bewegung des Drückers 36 mit geringerer bzw. stärkerer Kraftausübung auf die Tür 16 erreicht. Die Stufe mit der langsameren Bewegungsgeschwindigkeit des Drückers 36 kann genutzt werden, um einen anfänglichen Öffnungswiderstand beim Öffnen der Tür 16 zu überwinden. Die Stufe mit der erhöhten Bewegungsgeschwindigkeit des Drückers 36 kann dagegen genutzt werden, um nach Überwindung eines solchen anfänglichen Öffnungswiderstands den Drücker 36 rasch in seine gewünschte Endstellung (Aktivstellung) zu bringen.

Es versteht sich, dass das erläuterte Zahnstangengetriebe 38, 42 nicht nur zweistufig, sondern z.B. auch dreistufig oder vierstufig ausgestaltet sein kann. Je nach Profil der beim Öffnen der Tür 16 zu überwindenden Widerstandskräfte kann sich eine Ausgestaltung des Türöffners 20 mit mehr als zwei Übersetzungskonfigurationen empfehlen. Für einen solchen Fall kann z.B. der Zahnkranz 42 mit mehr als zwei Umfangsverzahnungen ausgeführt sein und die Zahnstange 38 kann eine entsprechende Anzahl längsversetzter Längsverzahnungen aufweisen. Das Zusammenwirken der verschiedenen Verzahnungspaarungen von Zahnkranz 42 und Zahnstange 38 ist derart, dass dann, wenn eine der Verzahnungspaarungen außer kämmenden Eingriff gerät, eine andere der Verzahnungspaarungen in kämmenden Eingriff gelangt, sodass stets ein Kraftfluss vom Elektromotor 30 zum Drücker 36 gewährleistet ist.

Soweit eine zugübertragende Kopplung zwischen dem Koppelteil 36 und der Tür 16 ermöglicht ist, z.B. durch eine Magnetkopplung oder eine lösbare Formschlusskopplung, kann der Aktormechanismus 18 alternativ oder zusätzlich als Türschließer arbeiten, mit dem sich die Tür 16 aus einer spaltgeöffneten Stellung in ihre Schließstellung zuziehen lässt. Dabei kann auf einem ersten Teil des Schließwegs die stärker übersetzend wirkende Getriebestufe des Zahnstangengetriebes zum Einsatz kommen und auf einem zweiten, restlichen Teil des Schließwegs, auf dem ggf. ein erhöhter Schließwiderstand zu überwinden ist, die geringer übersetzend wirkende Getriebestufe.

## Patentansprüche

1. Aktormechanismus zum Antrieb einer beweglichen Komponente eines Gegenstands der Haushaltsausstattung, umfassend
- einen Elektromotor,
- einen mittels des Elektromotors innerhalb eines begrenzten Bewegungsbereichs insbesondere linearbeweglich antreibbaren Koppelteil zur schub- oder/und zugübertragenden Kopplung mit der beweglichen Komponente und
- einen Kraftübertragungsmechanismus zwischen dem Elektromotor und dem Koppelteil, wobei der Kraftübertragungsmechanismus bei gegebener Drehzahl des Elektromotors eine veränderliche Bahngeschwindigkeit des Koppelteils zu gewährleisten vermag.

2. Aktormechanismus nach Anspruch 1, wobei der Kraftübertragungsmechanismus bei gegebener Drehzahl des Elektromotors in unterschiedlichen Teilbereichen des Bewegungsbereichs des Koppelteils eine jeweils unterschiedliche Bahngeschwindigkeit des Koppelteils bewirkt.

3. Aktormechanismus nach Anspruch 2, wobei die Teilbereiche unterschiedliche Streckenlänge haben.

4. Aktormechanismus nach Anspruch 3, wobei der Kraftübertragungsmechanismus bei gegebener Drehzahl des Elektromotors in einem Teilbereich mit größerer Streckenlänge eine höhere Bahngeschwindigkeit des Koppelteils bewirkt als in einem Teilbereich mit kürzerer Streckenlänge.

5. Aktormechanismus nach Anspruch 3 oder 4, wobei jeder der Teilbereiche eine Streckenlänge von mindestens etwa 10 mm oder mindestens etwa 15 mm oder mindestens etwa 20 mm aufweist oder/und eine Streckenlänge von höchstens etwa 120 mm oder höchstens etwa 100 mm oder höchstens etwa 80 mm aufweist.

6. Aktormechanismus nach einem der Ansprüche 2 bis 5, wobei der Kraftübertragungsmechanismus eine Mehrzahl in parallelen Kraftübertragungszweigen angeordneter, jeweils eine unterschiedliche Übersetzung definierender Verzahnungspaarungen umfasst, die in je einem anderen Teilbereich des Bewegungsbereichs des Koppelteils in kämmendem Eingriff stehen.

7. Aktormechanismus nach Anspruch 6, wobei eine erste Verzahnung jeder der Mehrzahl Verzahnungspaarungen von einer mit dem Koppelteil zur gemeinsamen Linearbewegung gekoppelten Zahnstangenanordnung gebildet ist und die zweite Verzahnung jeder der Mehrzahl Verzahnungspaarungen als Zahnradverzahnung ausgebildet ist.

8. Aktormechanismus nach Anspruch 7, wobei die zweite Verzahnung jeder der Mehrzahl Verzahnungspaarungen von einer sich insbesondere ringsum erstreckenden Zahnrad-Umfangsverzahnung mit jeweils unterschiedlichem Wälzkreidurchmesser gebildet ist und die Zahnstangenanordnung in Zuordnung zu jeder der Zahnrad-Umfangsverzahnungen eine sich insbesondere über einen jeweils unterschiedlichen Stangenlängsabschnitt erstreckende Längsverzahnung aufweist.

9. Aktormechanismus nach Anspruch 8, wobei die Zahnrad-Umfangsverzahnungen und die Längsverzahnungen jeweils quer zur Stangenlängsrichtung gegeneinander versetzt sind.

10. Aktormechanismus nach einem der Ansprüche 1 bis 9, wobei der Aktormechanismus als vorgefertigtes, mechanisch funktionsfähiges Aktormodul ausgebildet ist, wobei das Aktormodul ein Modulgehäuse aufweist, in welchem der Elektromotor und ein den Koppelteil bildender Stangenkörper aufgenommen sind, wobei der Stangenkörper zwischen einer Vorschubposition, in welcher der Stangenkörper mit dem Koppelteil voran aus dem Modulgehäuse herausgefahren ist, und einer Rückzugsposition, in welcher der Stangenkörper in das Modulgehäuse insbesondere wenigstens annähernd vollständig zurückgezogen ist, in Stangenlängsrichtung beweglich ist.

11. Aktormechanismus nach Anspruch 10, wobei der Kraftübertragungsmechanismus bei gegebener Drehzahl des Elektromotors in einem näher bei der Rückzugsposition des Stangenkörpers liegenden, insbesondere die Rückzugsposition umfassenden ersten Teilbereich des Bewegungsbereichs des Koppelteils eine geringere Bahngeschwindigkeit des Koppelteils bewirkt und in einem weiter von der Rückzugsposition entfernten zweiten Teilbereich eine größere Bahngeschwindigkeit des Koppelteils bewirkt.

12. Ausstattungsgegenstand für einen Haushalt, umfassend eine bewegliche Komponente und einen Aktormechanismus zum Antrieb der beweglichen Komponente, wobei der Aktormechanismus einen Elektromotor, einen mittels des Elektromotors innerhalb eines begrenzten Bewegungsbereichs insbesondere linearbeweglich antreibbaren Koppelteil zur schub- oder/und zugübertragenden Kopplung mit der beweglichen Komponente und einen Kraftübertragungsmechanismus zwischen dem Elektromotor und dem Koppelteil umfasst, wobei der Kraftübertragungsmechanismus bei gegebener Drehzahl des Elektromotors eine veränderliche Bahngeschwindigkeit des Koppelteils zu gewährleisten vermag.

13. Ausstattungsgegenstand nach Anspruch 12, wobei der Ausstattungsgegenstand ein Elektrogerät mit einem in einem Gerätehauptkörper gebildeten Nutzraum ist und die bewegliche Komponente eine relativ zu dem Gerätehauptkörper beweglich angeordnete Tür zum Verschließen des Nutzraums ist, wobei der Aktormechanismus für mindestens eine der beiden folgenden Arbeitsweisen ausgebildet und gesteuert ist:
- er arbeitet als Türöffner zum Aufdrücken der geschlossenen Tür, und
- er arbeitet als Türschließer zum Schließen der spaltgeöffneten Tür.

14. Ausstattungsgegenstand nach Anspruch 13, wobei der Aktormechanismus dazu eingerichtet ist, bei gegebener Drehzahl des Elektromotors eine niedrigere Bahngeschwindigkeit des Koppelteils innerhalb eines eine Türschließstellung umfassenden ersten Teilbewegungsbereichs der Tür zu bewirken als in einem zweiten Teilbewegungsbereich, in welchem die Tür stärker geöffnet ist als in dem ersten Teilbewegungsbereich.

15. Ausstattungsgegenstand nach Anspruch 13 oder 14, wobei der Ausstattungsgegenstand eines der folgenden ist: ein Haushalts-Kühlgerät, eine Geschirrspülmaschine, eine Wäschbehandlungsmaschine.
